Europäisches Patentamt

European Patent Office

Office européen des brevets

(19)

(11) Veröffentlichungsnummer: **0 292 753 B1**

# (12) EUROPÄISCHE PATENTSCHRIFT

(45) Veröffentlichungstag der Patentschrift:
27.02.91 Patentblatt 91/09

(51) Int. Cl.⁵: **G09F 7/00**

(21) Anmeldenummer: **88107206.0**

(22) Anmeldetag: **05.05.88**

(54) Feuersicheres Kennzeichnungsschild.

(30) Priorität: **25.05.87 DE 8707471 U**
**22.07.87 DE 8710008 U**
**03.10.87 DE 8713319 U**

(43) Veröffentlichungstag der Anmeldung:
**30.11.88 Patentblatt 88/48**

(45) Bekanntmachung des Hinweises auf die
Patenterteilung:
**27.02.91 Patentblatt 91/09**

(84) Benannte Vertragsstaaten:
**AT BE CH DE ES FR GB GR IT LI LU NL SE**

(56) Entgegenhaltungen:
**CH-A- 616 522**

(56) Entgegenhaltungen:
**DE-A- 2 708 154**
**DE-B- 2 914 939**
**FR-A- 2 308 152**
**GB-A- 2 019 630**
**US-A- 1 575 997**

(73) Patentinhaber: **Schuld, Herbert**
**Rheingaustrasse 101**
**D-6200 Wiesbaden (DE)**

(72) Erfinder: **Schuld, Herbert**
**Rheingaustrasse 101**
**D-6200 Wiesbaden (DE)**

(74) Vertreter: **Blumbach Weser Bergen Kramer**
**Zwirner Hoffmann Patentanwälte**
**Sonnenberger Strasse 100**
**D-6200 Wiesbaden 1 (DE)**

## Beschreibung

Kennzeichnungsschilder werden in vielen Varianten und auf vielen Einsatzgebieten verwendet. Insbesondere im industriellen Bereich, beispielsweise bei der Kennzeichnung von Rohrleitungen, kommt es dabei auf gute Erkennbarkeit, einfache Montage und Dauerhaftigkeit an. Bekannte Schilder, die diese Forderungen erfüllen, sind beispielsweise in der DE-A-27 08 154 beschrieben. Aus der US-A-1 575 997 ist ein Kennzeichnungsschild bekannt, bei dem ein Symbolträger aus Blech ein oder mehrere symbole in Form von Ausnehmungen enthält und von einen farblich kontrastierendes Hintergrund augeordnet ist.

Eine zusätzliche Anforderung an Schilder und ihre Halterungen geht aus Sicherheitsgründen dahin, daß die Schilder auch nach einem Brand in beispielsweise einer Raffinerie oder eines Transportfahrzeuges lesbar sein müssen. Häufig ist es nämlich von entscheidender Bedeutung zu wissen, welche Stoffe eine gekennzeichnete Rohrleitung oder ein Tankfahrzeug fördert oder auch befördert hat.

Der Erfindung liegt demgemäß die Aufgabe zugrunde, ein feuersicheres Kennzeichnungsschild zu schaffen, das gut erkennbar und leicht und dauerhaft montierbar ist, zusätzlich aber auch nach einem Brand noch lesbar bleibt. Gleichzeitig soll das Schild allen einschlägigen Vorschriften entsprechen und bequem handhabbar sein. Die Lösung der Aufgabe ist im Patentanspruch 1 angegeben.

Der Grundgedanke der Erfindung besteht demnach darin, ein Kennzeichnungsschild mit allen wesentlichen Bestandteilen aus hochwärmebeständigem Stahl herzustellen. Dadurch ist die Lesbarkeit auch nach Einwirkung großer Hitze sichergestellt. Da ein Brandfall aber normalerweise selten auftritt, ist im üblichen Betrieb nicht nur die mögliche Lesbarkeit, sondern eine klare und gute Erkennbarkeit auch bei größerer Entfernung wichtig. Eine solche Erkennbarkeit ist bei Verwendung von lediglich hochwärmebeständigem Stahl wegen der dann fehlenden Kontraste nicht gegeben. Erfindungsgemäß wird die gute Erkennbarkeit durch das Kontrastmaterial sichergestellt, das beispielsweise auch aus Kunststoff bestehen kann, der keine hohe Temperaturbeständigkeit hat. Im Brandfall wird dann zwar das Kontrastmaterial zerstört, die Lesbarkeit bleibt aber bei verringertem Kontrast erhalten.

Weit das kontrastierende Material die Ausnehmungen ausfüllt, ist die Lesbarkeit im Ursprungszustand weiter verbessert. Außerdem kann sich kein Schmutz in den Ausnehmungen ansammeln, so daß der Reinigungsaufwand entfällt. Das ist insbesondere in Industriebetrieben wichtig, bei denen Wartungs- und Folgekosten möglichst vermieden werden müssen.

Weiterbildungen der Erfindung sind Gegenstand der Unteransprüche. So kann vorgesehen sein, daß die Ausnehmungen mit dem Kontrastmaterial ausgespritzt sind. Dazu kann die zum Ausspritzen benutzte Spritzgußform, in die der Symbolträger zum Ausspritzen eingelegt wird, so ausgebildet sein, daß das Kontrastmaterial auf der Betrachtungsseite aus dem Blech hervorragt und die Ränder der Ausnehmung überdeckt, derart, daß das jeweilige, durch das Kontrastmaterial gebildete Symbol größer als das durch die Ausnehmung gebildete Symbol ist. Auf diese Weise läßt sich eine dauerhafte Verbindung zwischen dem Symbolträger und dem Kontrastmaterial erzielen, insbesondere dann, wenn die Stpritzgußform so ausgebildet ist, daß das Kontrastmaterial auf der dem Betrachter abgewandten Rückseite hinter der Ausnehmung eine geschlossene Fläche bildet. Wenn das Kontrastmaterial glatt ist, beispielsweise aus Kunststoff besteht, sorgt die geschlossene Fläche außerdem für leichteres Gleiten beim Einschieben beispielsweise in die Nuten einer Grundplatte.

Wenn das Ausspritzen unter Verwendung einer Spritzgußform, in die die jeweiligen Symbolträger eingelegt werden müssen, vermieden werden soll, können auch getrennt hergestellte Symbolelemente aus dem Kontrastmaterial in die Ausnehmungen eingesteckt oder eingepreßt werden. Zur sicheren Festlegung kann dann vorgesehen sein, daß die Symbolelemente mit Raststiften druckknopfartig mit einer auf der Rückseite des Symbolträgers angeordneten Gegenplatte verbunden sind. Außerdem können die Symbolelemente auch mit dem Symbolträger verklebt sein. Auch in den vorstehend beschriebenen Fällen besteht wieder die Möglichkeit, daß die Symbolelemente auf der Betrachtungsseite die Ränder der Ausnehmungen überdecken, derart, daß die Symbolelemente größer als die durch die Ausnehmungen gebildeten Symbole sind. Wenn das Kontrastmaterial die Ausnehmungen auf der dem Betrachter abgewandten Seite nur abdeckt, kann es in Form einer vorzugsweise weißen Kontrastplatte hinter dem Symbolträger angeordnet sein. Gegebenenfalls können auch zwei oder mehrere unterschiedlich gefärbte Kontrastplatten bei einem einzigen Schild benutzt werden. Das Kontrastmaterial kann aus Kunststoff, vorzugsweise thermoplastischem Kunststoff, aber auch aus Keramik bestehen und je nach Wunsch oder entsprechend den jeweiligen Vorschriften eingefärbt sein.

Vorzugsweise werden mehrere Symbolträger auf einer aus hochwärmebeständigem, rostfreiem Stahlblech bestehenden Grundplatte aneinandergereiht, so daß aus Buchstaben, Zahlen und Sonderzeichen beliebige Schilder zusammengestellt werden können. Zur Befestigung der Symbolträger an der Grundplatte können entweder diese oder die Symbolträger am Ober- und Unterrand mit Umfalzungen versehen werden, die die glatte Ober- und Unterkante der Symbolträger bzw. der Grundplatte durch Einschieben aufnehmen. Ein anderer Vorschlag hierzu sieht vor, daß die Grundplatte in regelmäßigen Abständen Bohrungen oder Schlitze aufweist, in die in angepaßtem Abstand angeordnete Befestigungslappen der Symbolträger einsteckbar sind, so daß die Symbolträger durch Umlegen der Befestigungslappen an der Grundplatte festgelegt werden können.

Die Grundplatte läßt sich zweckmäßig auf einem Tragebügel anordnen, der mittels eines Schellenbandes an einem Schilderträger, beispielsweise einem Rohr, festlegbar ist. Auch der Tragebügel und das Schellenband bestehen aus hochwärmebeständigem, rostfreiem Stahl. Zweckmäßig kann vorgesehen sein, daß der Tragebügel ein Paar von sich gegenüberliegenden Langlöchern zum Druchziehen eines Schellenbandes aufweist. Auf der der Grundplatte zugewandten Seite des Tragebügels kann ein U-förmiger Blechstreifen mit seiner Basis befestigt sein, und zwar zweckmäßig durch Punktschweißen. Die Grundplatte besitzt dann Öffnungen, durch die die beiden Schenkel des Blechsteifens gesteckt und anschließend zum Festlegen der Grundplatte umgelegt werden. Die Öffnungen zum Durchstecken der Schenkel des Blechstreifens werden mit Vorteil als Sätze in regelmäßigen Abständen über die Länge der Grundplatte wiederholt, und die Sätze von Öffnungen bestehen jeweils aus zwei gegeneinander um 90° versetzten Paaren von sich gegenüberliegenden Langlöchern. Dann kann die Grundplatte ein Blechstreifen in Form eines Endlosmaterials sein, von dem die jeweils benötigte Länge abgeschnitten wird, und die Grundplatte kann je nach den vorliegenden Verhältnissen in zwei um 90° gegeneinander versetzten Lagen auf dem Tragebügel befestigt werden. Zusätzlich kann die Grundplatte zwischen den Sätzen von Öffnungen Zusatzbohrungen besitzen, die eine Befestigung beispielsweise mit Schraubbolzen unter besonderen Bedingungen ermöglichen.

Statt einer gemeinsamen Grundplatte für mehrere Symbolträger kann zur Aneinanderreihung auch vorgesehen sein, daß die Symbolträger einen seitlichen, plattenartigen Fortsatz besitzen, auf dem der jeweils nächste Symbolträger festlegbar ist. Damit alle Symbolträger in der gleichen Ebene liegen, wird zweckmäßig der Fortsatz gegenüber dem Symbolträger in der Ebene zurückversetzt. Zur Befestigung der Symbolträger auf dem Fortsatz können wiederum an einem der beiden Teile Umfalzungen des Ober- und Unterrandes vorgesehen werden, in die die glatte Ober- und Unterkante des anderen Teils eingeschoben werden. Zur Verbesserung der Klemmwirkung besitzt zweckmäßig der Fortsatz vorstehende Nocken, die einen aufgeschobenen Symbolträger klemmend halten.

Kennzeichnungsschilder nach der Erfindung sind auch wichtig als Gefahrenschild für Fahrzeuge in Form einer Tafel, die eine Beschriftung in Form von Symbolen, beispielsweise Buchstaben und Ziffern, trägt. Solche Gefahrenschilder sind für Fahrzeuge vorgeschrieben, die gefährliche Güter transportieren, beispielsweise brennbare oder giftige Flüssigkeiten, Säuren oder ähnliches. Die Schilder müssen dabei bestimmten Vorschriften hinsichtlich ihrer Größe, Farbe und anderer Kriterien genügen. Die jeweils transportierten Stoffe und Gefahrenklassen werden durch vorgeschriebene Zahlen- und Buchstabenkombinationen gekennzeichnet, denn insbesondere bei Unfällen oder Bränden ist es von entscheidender Bedeutung zu wissen, welche Stoffe transportiert werden.

Bisher übliche Gefahrenschilder bestehen aus Blech- oder Kunststofftafeln mit aufgedruckten oder aufgeklebten Symbolen. Nach oder während eines Brandes sind die Schilder dann häufig nicht mehr lesbar. Zur Gefahrenbekämpfung ist es aber gerade bei einem Brand wichtig zu wissen, um welche Stoffe es sich handelt, damit eine zweckmäßige Bekämpfung erfolgen kann und gleichzeitig notwendige Vorsichts- und Sicherheitsmaßnahmen getroffen werden können. Bei Verwendung von Kennzeichnungsschildern nach der Erfindung als Gefahrenschilder ist sichergestellt, daß die Schilder auch nach einem Brand sicher lesbar bleiben.

Eine vorteilhafte Weiterbildung für den Einsatz als Gefahrenschild sieht vor, daß die Tafel innerhalb eines Rahmens eine Einschubeinrichtung für aneinanderreihbare Symbolträger und eine Abschlußvorrichtung aufweist, die die eingeschobenen Symbolträger sichert, daß die Symbolträger die Symbole in Form von Ausnehmungen enthalten und daß wiederum alle Teile des Schildes aus hochwärmebeständigem, rostfreiem Stahl bestehen. Selbst wenn ein solches Gefahrenschild bei einem Brand großer Hitze ausgesetzt war, bleiben die jeweiligen Symbole in Form der Ausnehmungen sicher lesbar. Da die Symbolträger auswechselbar sind, ist ein schnelles Anpassen der vorgeschriebenen Kennzeichnung für die jeweils transportierten Güter möglich, ohne daß eine Vielzahl unterschiedlicher Warnschilder mitgeführt werden muß.

Zusätzlich kann vorgesehen sein, daß die Tafel innerhalb des Rahmens eine Einsenkung aufweist und die Einschubeinrichtung zwei im Abstand der Symbolträgerhöhe parallele Blechstreifen besitzt, die auf dem Boden der Einsenkung angeordnet sind. Die Symbolträger werden am Ober- und Unterrand mit Umfalzungen versehen, mit denen sie auf die glatten Außenkanten der Blechstreifen aufschiebbar sind. Umgekehrt können die Umfalzungen auch an den Außenkanten der Blechstreifen angeordnet sein, so daß sich die Symbolelemente mit glatten Ober- und Unterkanten in die Umfalzungen einschieben lassen. Die Einschubeinrichtung kann auch eine mit einem Ende auf dem Boden der Einsenkung befestigte Trägerplatte aufweisen, wobei die Symbolträger im Querschnitt die Form eines flachgedrückten Rohres haben, derart, daß sie auf die Trägerplatte aufschiebbar sind. Die Symbolträger lassen sich dann leicht auswechseln. Außerdem können sie dann auch auf der Rückseite (andere) Symbole besitzen oder eine leere Fläche aufweisen, die aber farblich an das Gefahrenschild angepaßt ist.

Zur Bildung der Abschlußvorrichtung, die die Symbolträger sichert, kann vorgesehen sein, daß der sich an das Ende der Einschubeinrichtung anschließende Rahmenschenkel leicht lösbar, beispielsweise abklappbar, ausgebildet ist. Eine zweckmäßige Weiterbildung sieht dabei vor, daß der Rahmenschenkel wenigstens einen zum Rahmeninneren weisenden Schieber besitzt, der klemmend in einen unterhalb der Symbolträger angeordneten Kanal einschiebbar ist. Eine solche Ausführung hält auch dem rauhen Betrieb bei ständig im Einsatz befindlichen Fahrzeugen stand, ermöglicht aber trotzdem eine bequemes Wechseln der Symbolträger zur Zusammenstellung der jeweils erforderlichen Kennzeichnungen. Der Schieber besitzt dabei mit Vorteil ein Rastorgan, das zusammen mit einer Rastfeder den Rahmenschenkel im geschlossenen Zustand verrastet.

In weiterer Ausbildung der Erfindung und in Anpassung an die bestehenden Vorschriften weist das Kennzeichnungsschild wenigstens zwei Zeilen von Symbolträgern mit je einer Einschubeinrichtung auf. Der Rahmenschenkel besitzt dann zweckmäßig zwei Schieber, die je in einen eigenen Kanal klemmend einschiebbar sind.

Um unbefugte Manipulationen an einem Gefahrenschild zu verhindern oder jedenfalls zu erschweren, wird zweckmäßig der Rahmenschenkel mit einem Schloß versehen, beispielsweise einem Vorhängeschloß, das durch korrespondierende Bohrungen an der Tafel und am Rahmenschenkel geführt ist.

Nachfolgen werden Ausführungsbeispiele der Erfindung anhand der Zeichnung beschrieben. Es zeigen :

Fig. 1 und 2 ein Kennzeichnungsschild als Ausführungsbeispiel der Erfindung in Vorder- und Seitenansicht ;

Fig. 3, 4 und 5 Schnittansichten a-a gemäß Fig. 1 für drei Ausführungsbeispiele ;

Fig. 6, 7 und 8 ein weiteres Ausführungsbeispiel der Erfindung in Vorderansicht, Aufsicht und Seitenansicht ;

Fig. 9 die Grundplatte eines dritten Ausführungsbeispiels der Erfindung ;

Fig. 10 einen Symbolträger zur Befestigung auf der Grundplatte gemäß Fig. 9 ;

Fig. 11 ein Kennzeichnungsschild als Ausführungsbeispiel der Erfindung, das an einer Rohrleitung angebracht ist ;

Fig. 12 die Aufsicht eines Tragebügels zur Verwendung bei dem Schild gemäß Fig. 11 ;

Fig. 13 die Seitenansicht des Tragebügels nach Fig. 12 ;

Fig. 14 eine vergrößerte Teilseitenansicht des Schildes nach Fig. 11 ;

Fig. 15 die schematische Ansicht eines zweizeiligen Gefahrenschildes als Ausführungsbeispiel der Erfindung ;

Fig. 16 eine Schnittansicht entsprechend der Schnittlinie 2-2 in Fig. 15 ;

Fig. 17 eine vergrößerte Schnittansicht eines Symbolträgers entsprechend der Schnittlinie 3-3 in Fig. 15 ;

Fig. 18 eine Schnittansicht ähnlich der Ansicht in Fig. 16 für ein abgeändertes Ausführungsbeispiel ;

Fig. 19 eine vergrößerte Schnittansicht eines Symbolträgers für das Ausführungsbeispiel gemäß Fig. 18.

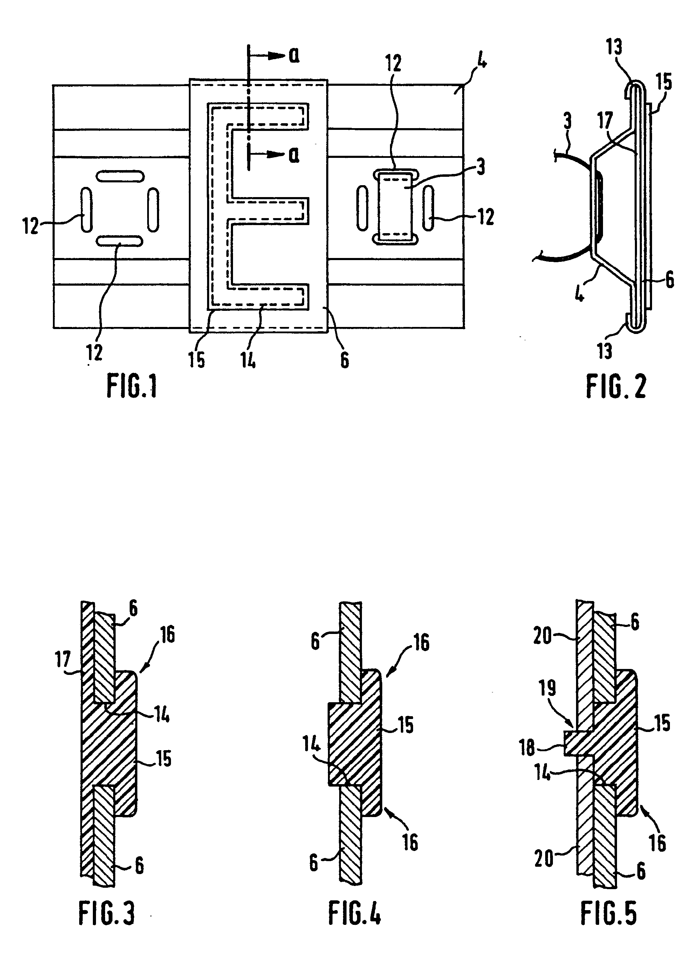

Bei dem Ausführungsbeispiel gemäß Fig. 1 und 2 ist ein Symbolträger 6 auf einer Grundplatte 4 festgelegt. Dazu besitzt der Symbolträger 6 Umfalzungen 13, mit denen der Symbolträger auf die glatten Ränder der Grundplatte 4 zusammen mit weiteren, aneinandergereihten Symbolträgern aufgeschoben werden kann. Zur Vereinfachung ist in Fig. 1 nur ein Symbolträger 6 gezeigt. Die Grundplatte 4 besitzt eine durchlaufende Einsenkung, auf deren Boden zwei Paare von Langlöchern 12 um 90° gegeneinander versetzt angeordnet sind. Durch die Langlöcher können Schellenbänder 3 zur Befestigung beispielsweise an einer Rohrleitung gezogen werden. Die gegenienander versetzten Paare von Langlöchern 12 ermöglichen ein Umsetzen der Grundplatte je ,nach den Bedürfnissen in der Praxis.

Wie die Schnittansicht a-a in Fig. 3 zeigt, besitzt der Symbolträger 6 eine Ausnehmung 14 in Form des jeweils gewünschten Symbols, im vorliegenden Fall also des Buchstabens E. Die Ausnehmung 14 ist mit einem Kontrastmaterial 15, beispielsweise Kunststoff, ausgespritzt. Dazu wird der Symbolträger 6 in eine entsprechend gestaltete Spritzgießform eingelegt, die so gestaltet ist, daß das Kontrastmaterial 15 auf der dem Betrachter zugewandten Vorderseite (rechts in Fig. 3) die Ränder der Ausnehmung 14 im Bereich 16 geringfügig überdeckt, beispielsweise um etwa 3 mm. Das Symbol oder, genauer gesagt, die "Strichstärke" des Symbols aus dem Kontrastmaterial 15 ist demgemäß größer als die "Strichstärke" der Ausnehmung 14. Auf der Rückseite des Symbolträgers 6 (links in Fig. 3) bildet das Kontrastmaterial 15 eine geschlossene Fläche 17, die über den gesamten Symbolträger 6 oder jedenfalls einen größeren Teil hiervon reichen kann.

Das Kontrastmaterial 15 ist durch das Aus- und Umspritzen der Ausnehmung 14 fest mit dem Symbolträger 6 verbunden. Die Symbole sind im Ursprungszustand wegen des Kontrastmaterials sehr gut erkennbar. Wenn bei einem Brand sehr große Hitze einwirkt, verbrennt gegebenenfalls das Kontrastmaterial 15. Da sowohl die Symbolträger 6 als auch die Grundplatte 4 und das Schellenband 3 aus hochwärmebeständigem, rostfreiem Stahlblech hergestellt sind, bleiben die dann durch die Ausnehmung 14 gebildeten Symbole trotzdem sicher lesbar.

Die Schnittdarstellung in Fig. 4, die der Darstellung in Fig. 3 entspricht, zeigt ein weiteres Ausführungsbeispiel. Hierbei ist die Ausnehmung 14 des Symbolträgers 6 nicht durch Aus- und Umspritzen in einer Form mit Kontrastmaterial ausgefüllt, sondern es wird das jeweilige Symbol getrennt hergestellt, beispielsweise durch Spritzgießen, und dann in die genau angepaßte Ausnehmung eingesteckt oder eingepreßt. Auch hierbei überdeckt das Kontrastmaterial 15 bei 16 die Ränder der Ausnehmung 14.

Bei einem dritten Ausführungsbeispiel gemäß Fig. 5 ist die Verbindung zwischen dem wiederum getrennt aus Kontrastmaterial 15 hergestellten Symbol einerseits und dem Symbolträger 6 andererseits dadurch verbessert, daß das Kontrastmaterial 15 rückseitige, in Abständen angeordnete und angespritzte Zapfen 18 besitzt, die klemmend in entsprechende Bohrungen 19 einer rückseitigen Gegenplatte 20 eingepreßt sind. Wenn das Kontrastmaterial 15 aus thermoplastischem Kunststoff besteht, können außerdem die vorstehenden Zapfen 18 unter Wärmeeinwirkung vernietet werden.

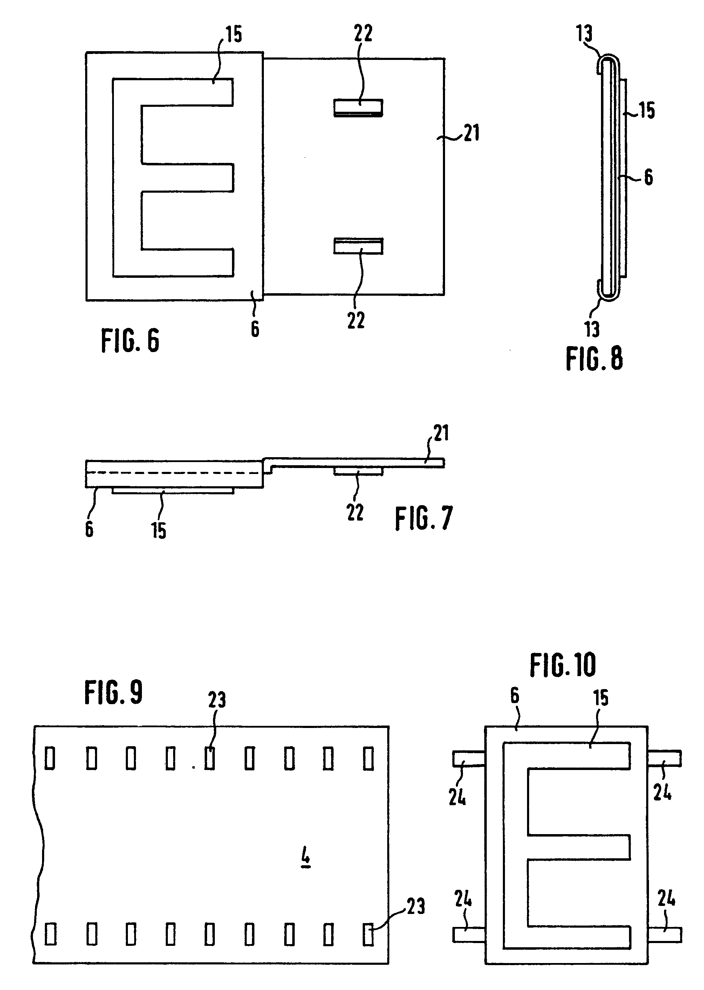

In den Fig. 6, 7 und 8 ist ein weiteres Ausführungsbeispiel der Erfindung gezeigt. Ein Symbolträger 6 ist hier vorzugsweise einstückig mit einem seitlichen Fortsatz 21 versehen, der - wie die Aufsicht in Fig. 7 zeigt - in der Ebene nach hinten, d.h. weg vom Betrachter des Symbols, zurückgesetzt ist. Der Symbolträger 6 weist wie bei dem Ausführungsbeispiel nach Fig. 1 und 2 Umfalzungen 13 am Ober- und Unterrand auf, so daß jeweils der nächste Symbolträger 6 auf den Fortsatz 21 des vorhergehenden Symbolträgers 6 aufgeschoben werden kann. Eine Verbesserung der Klemmwirkung wird dadurch erzielt, daß der Fortsatz 21 leicht erhöhte Nocken 22 besitzt, die beispielsweise durch Einschneiden und Hochdrücken erzeugt worden sind.

Wie bei dem Ausführungsbeispiel nach Fig. 1 und 2 weisen die Symbolelemente gemäß Fig. 6 bis 8 Ausnehmunen 14 auf, die entsprechend der Darstellung in den Fig. 3 bis 5 mit einem Kontrastmaterial 15 ausgefüllt sind. Das Symbolelement 6 mit seinem Fortsatz 21 besteht wiederum aus hochwärmefestem, rostfreiem Stahlblech.

Bei dem weiteren Ausführungsbeispiel nach Fig. 9 und 10 ist eine Grundplatte 4 am Ober- und Unterrand mit je einer Reihe von kleinen Schlitzen 23 versehen, die zur Festlegung von Symbolelementen 6 gemäß Fig. 10 dienen. Die Symbolelemente 6 sind dazu mit auf der Rückseite angeschweißten Befestigungslappen 24 ausgestattet, die nach rechtwinkligem Umbiegen in die Schlitze 23 gesteckt und dann auf der Rückseite der Grundplatte 4 umgelegt werden. Die Schweißpunkte zur Befestigung der Lappen 24 haben dabei einen solchen Abstand, daß nach dem Umbiegen der Lappen 24 ein bequemes Einstecken in zwei zugeordnete Schlitze 23 möglich ist. Die Symbolelemente 6 entsprechen im übrigen bezüglich ihres Materials und dem verwendeten Kontrastmaterial 15 den oben beschriebenen Ausführungsbeispielen.

Die Grundplatte 4 gemäß Fig. 9 kann zur Befestigung beispielsweise an einem Rohr ebenso wie die Grundplatte 4 gemäß Fig. 1 und 2 mit einer durchlaufenden Einsenkung versehen sein, die wiederum Paare von Langlöchern 12 zur Aufnahme eines Schellenbandes 3 besitzt. Es besteht aber auch die Möglichkeit, auf der Rückseite der Grundplatte 4 einen Tragebügel (nicht gezeigt) anzuschweißen oder auf andere Weise zu befestigen, ähnlich wie dies bei dem nachfolgend beschriebenen Ausführungsbeispiel gezeigt ist.

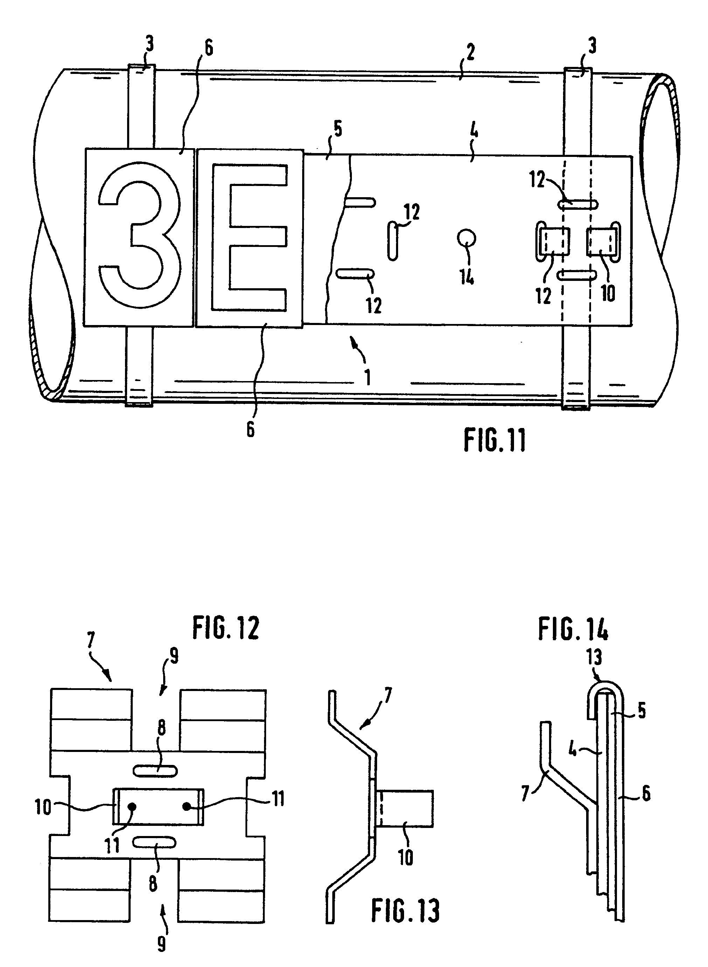

Gemäß Fig. 11 ist ein Kennzeichnungsschild als weiteres Ausführungsbeispiel der Erfindung an einer Rohrleitung 2 mit Hilfe von Schellenbändern 3 befestigt. Das Kennzeichnungsschild 1 besitzt eine Grundplatte 4, auf der eine Kontrastplatte 5 angeordnet ist, die im rechten Teil der Grundplatte 4 zur Verdeutlichung weggelassen ist. Auf der Kontrastplatte 5 werden die Symbolelemente 6 je nach Bedarf aneinandergereiht. Dabei können Ziffern, Buchstaben, Sonderzeichen und sonstige Symbole in an sich bekannter Weise verwendet werden.

Zur Befestigung der Grundplatte 4 ist ein Tragebügel 7 (Fig. 12, 13) vorgesehen. Der Tragebügel 7 besitzt ein Paar von sich gegenüberliegenden Langlöchern 8, durch die das Schellenband 3 gezogen wird und nach dem Anspannen den Tragebügel 7 an die Rohrleitung 2 anpreßt. Für das Schild gemäß Fig. 11 werden zwei Tragebügel 7 benutzt. Bei kleineren Schildern genügt auch ein Tragebügel, und bei sehr langen Schildern können weitere Tragebügel eingesetzt werden. Die Ausnehmungen 9 stellen sicher, daß das Schellenband 3 ohne Anliegen an einer scharfen Kante glatt durchgeführt werden kann.

Auf dem erhabenen Teil des Tragebügels 7 ist ein U-förmiger Blechstreifen 10 mit Hilfe von zwei Punktschweißungen 11 befestigt. Die beiden Schenkel des Bügels 10 werden durch zwei sich gegenüberliegende Langlöcher 12 ensprechend der Darstellung rechts in Fig. 11 gesteckt und anschließend nach innen umgelegt. Auf diese Weise wird die Grundplatte 4 auf den Tragebügeln 7 befestigt.

Es sind jeweils zwei gegeneinander um 90° versetzte Paare von Langlöchern 12 in Form von Sätzen in der Grundplatte 4 angeordnet. Beim gezeigten Ausführungsbeispiel befindet sich zwischen den beiden benutzten Sätzen von Langlöchern 12, von denen nur der rechte Satz erkennbar ist, ein weiterer Satz. Auf diese Weise besteht die Möglichkeit, beliebige Längen der Grundplatte 4 von einem Endlosmaterial abzuschneiden.

In Fig. 14 ist schematisch dargestellt, wie die Symbolelemente 6 auf der Grundplatte 4 befestigt sind. Die Symbolelemente 6 weisen dazu am oberen und unteren (nicht gezeigten) Rand Umfalzungen 13 auf, mit denen die Symbolelemente 6 auf die Grundplatte 4 aufgeschoben werden. Bei richtiger Bemessung tritt eine ausreichende Klemmwirkung auf, die ein unbeabsichtigtes oder mutwilliges Abziehen der Symbolelemente verhindert. Zwischen der Grundplatte 4 und den Symbolelementen 6 liegt die Kontrastplatte 5.

Alle Bestandteile des Kennzeichnungsschildes mit Ausnahme der Kontrastplatte 5 bestehen wiederum aus hochwärmebeständigem, rostfreiem Stahl, beispielsweise V2A oder V4A. Das Kennzeichnungsschild widersteht daher auch einem Brand. Die Kontrastplatte 5 verbrennt dann zwar, das Schild bleibt aber lesbar.

Das in den Fig. 15 bis 17 dargestellte Ausführungsbeispiel eines Gefahrenschildes ist tafelförmig ausgebildet. eine Grundplatte 31 besitzt eine zentrale Einsenkung 32, die oben, unten und links von einem Rahmen 33 eingefaßt ist. Ein U-förmiges Profil 34 teilt die Einsenkung 32 in zwei gleichhohe Zeilen auf.

Auf der Grundplatte 31 sind innerhalb der Ausnehmungen 32 im Bereich der beiden Zeilen jeweils gekröpfte Blechstreifen 35 angeordnet und beispielsweise durch Schweißen befestigt. Jeweils ein Paar von Blechstreifen 35 bildet eine Einschubeinrichtung für den Symbolträger 6, die an der Ober- und Unterkante mit Umfalzungen 13 versehen sind, mit denen sie auf die Blechstreifen 35 aufgeschoben werden können. Die Symbolträger 6 sind dadurch einerseits auch im Falle eines Brandes sicher festgelegt, können aber andererseits leicht ausgewechselt werden.

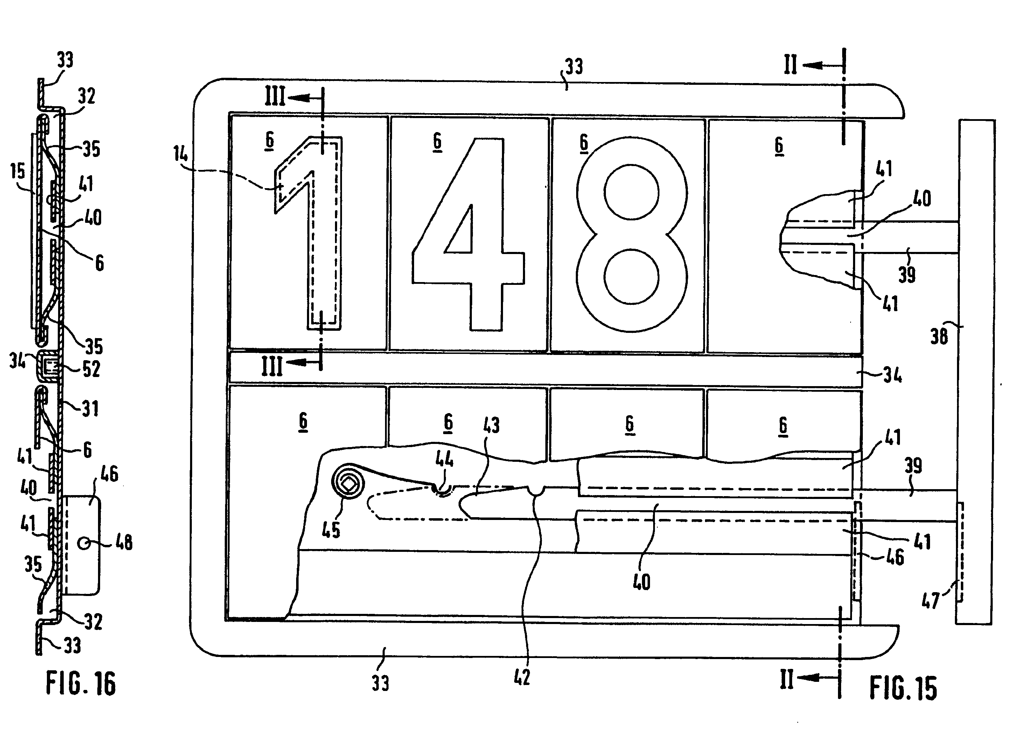

Nach dem Einschieben der jeweils gewünschten Symbolträger wird ein Abschluß durch Einschieben des rechten Rahmenschenkels 38 erreicht, der zwei in Richtung der Zeilen verlaufende Schieber 39 besitzt. Diese greifen klemmend in Kanäle 40 ein, die durch im Abstand von der Grundplatte 31 angeordnete Bleche 41 gebildet werden. Im Bereich ihres Endes besitzen die Schieber 39 eine Rastausnehmung 42 und eine Abschrägung 43. Die Abschrägung 43 verdrängt beim Einschieben das mit einer Auswölbung 44 versehene Ende einer Wendelfeder 45. Wenn der Rahmenschenkel 38 vollständig eingeschoben ist, legt sich die Auswölbung 44 in die Ausnehmung 42 des Schiebers 39, so daß der Rahmenschenkel 38 sicher verrastet ist. An der Grundplatte 31 ist eine Lasche 46 angebracht (in Fig. 16 vor der Schnittebene 2-2 dargestellt), und der Rahmenschenkel 38 weist eine entsprechende Lasche 47 auf. Bohrungen 48 in den Laschen 46, 47 fluchten nach dem Einschieben des Rahmenschenkels 38, so daß eine Sicherung mittels eines Vorhängeschlosses (nicht gezeigt) erfolgen kann.

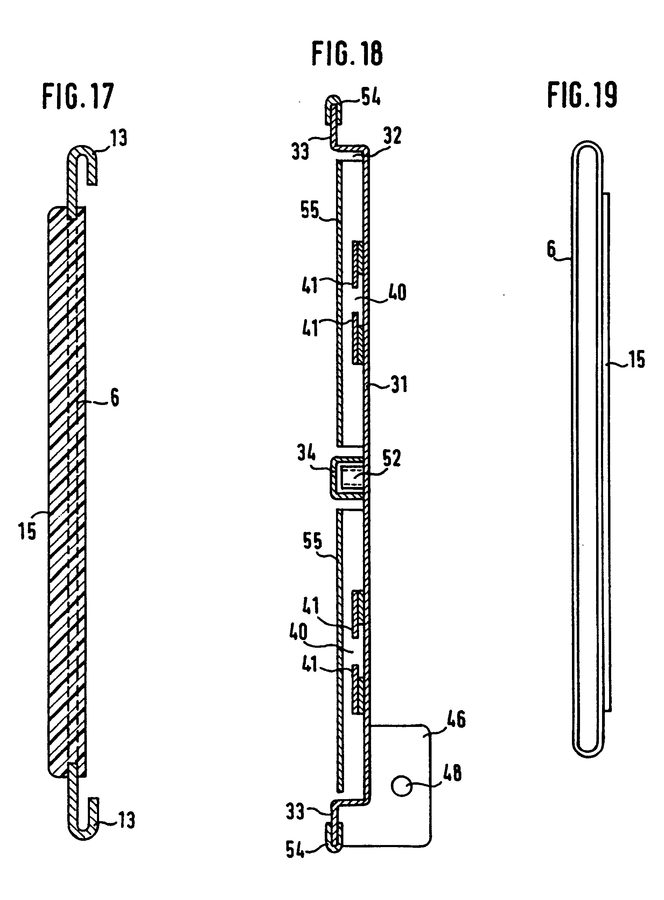

Die Symbolträger 6 besitzen jeweils eine Ausnehmung 14, die zur Vereinfachung nur für das Symbol "1" links oben in Fig. 15 gezeigt ist. Gemäß Fig. 17 ist die Ausnehmung 14 mit einem kontrastierenden Kunststoffmaterial 15 ausgespritzt, wobei das Material 15 die Ausnehmung 14 überragt und das Symbol etwas größer als die Ausnehmung 14 ist.

Zur Festlegung des Schildes dienen Gewindebuchsen 52, in die von der Rückseite her Gewindebolzen einschraubbar sind.

Alle Teile des Schildes mit Ausnahme des Kontrastmaterials 15 bestehen wiederum aus hochwärmebeständigem, rostfreiem Stahl.

In Fig. 18 ist ein gegenüber dem Ausführungsbeispiel gemäß Fig. 16 abgeändertes Beispiel dargestellt. Für gleiche Teile werden gleiche Bezugsziffern verwendet. Die Grundplatte 31 besitzt wiederum eine zentrale Einsenkung 32 die von dem Rahmen 33 eingefaßt ist. Der Rahmen 33 besitzt zusätzlich zu dem Ausführungsbeispiel gemäß Fig. 15, 16 eine umlaufende Schutzabdeckung 54. Die Einschubeinrichtung ist gegenüber dem vorhergehenden Ausführungsbeispiel abgewandelt. Statt der Blechstreifen 35 ist jeweils eine über die Länge der Einsenkung 32 durchlaufende Trägerplatte 55 vorgesehen, die mit ihrem einen Ende auf nicht dargestellte Weise mit der Grundplatte 31 verbunden ist, beispielsweise durch Punktschweißen. Die Trägerplatte 55 weist einen gewissen Abstand von der Grundplatte 32 auf, derart, daß Platz für die Bleche 41 und den Schieber 39 (in Fig. 18 nicht gezeigt) bleibt und außerdem die Symbolträger 6 aufgeschoben werden können, von denen ein vergrößerter Querschnitt in Fig. 19 dargestellt ist. Gemäß Fig. 19 hat der Symbolträger 6 die Form eines flachgedrückten Rohres, wobei die Abmessungen so gehalten sind, daß die Symbolträger auf die Trägerplatten 55 aufgeschoben werden können. Auf der nach dem Einschieben vorderen Seite weisen die Symbolträger wiederum Ausnehmungen auf, die in der oben beschriebenen Weise mit Kontrastmaterial 15 ausgefüllt sind. Auf der Rückseite sind die Symbolträger 6 entweder lediglich eingefärbt oder ebenfalls mit Symbolen versehen, gegebenenfalls wiederum in Form von Ausnehmungen mit Kontrastmaterial.

## Ansprüche

1. Feuersicheres Kennzeichnungsschild mit wenigstens einem Symbolträger (6) aus Blech, das ein oder mehrere Symbole in Form von Ausnehmungen (14) enthält, und einem farblich kontrastierenden Material (5, 15), dadurch gekennzeichnet, daß das Material die Ausnehmungen (14) ausfüllt, und daß das Blech ein hochwärmebeständiges rostfreies Stahlblech ist, und das kontrastievende Material (5, 15) so besdaffen ist, daß es unter Temperatureinwirkung die Ausnehmungen freigibt.

2. Schild nach Anspruch 1, dadurch gekennzeichnet, daß die Ausnehmungen (14) mit dem Kontrastmaterial (15) ausgespritzt sind.

3. Schild nach Anspruch 2, dadurch gekennzeichnet, daß das Kontrastmaterial (15) auf der Betrachtungsseite aus dem Blech vorragt und die Ränder der Ausnehmung überdeckt (bei 14), derart, daß das jeweilige, durch das Kontrastmaterial (15) ausgebildete Symbol größer als das durch die Ausnehmung (14) gebildete Symbol ist.

4. Schild nach Anspruch 3, dadurch gekennzeichnet, daß das Kontrastmaterial (15) auf der dem Betrachter abgewandten Rückseite hinter der Ausnehmung (14) eine geschlossene Fläche (17) bildet (Fig. 3).

5. Schild nach Anspruch 1, dadurch gekennzeichnet, daß in die Ausnehmungen (14) aus Kontrastmaterial (15) hergestellte Symbolelemente eingesteckt oder eingepreßt sind (Fig. 4, 5).

6. Schild nach Anspruch 5, dadurch gekennzeichnet, daß die Symbolelemente mit Raststiften (18) druckknopfartig mit einer auf der Rückseite des Symbolträgers (6) angeordneten Gegenplatte (20) verbunden sind (Fig. 5).

7. Schild nach Anspruch 1, dadurch gekennzeichnet, daß die Symbolelemente mit dem Symbolträger verklebt sind.

8. Schild nach einem der Ansprüche 5 bis 7, dadurch gekennzeichnet, daß die Symbolelemente auf der Betrachtungsseite die Ränder der Ausnehmungen (14) überdecken, derart, daß die Symbolelemente größer als die durch die Ausnehmungen (14) gebildeten Symbole sind.

9. Schild nach Anspruch 1, dadurch gekennzeichnet, daß das Kontrastmaterial in Form einer vorzugsweise weißen Kontrastplatte (5) hinter dem Symbolträger (6) angeordnet ist (Fig. 11 bis 14).

10. Schild nach einem der Ansprüche 1 bis 9, dadurch gekennzeichnet, daß das Kontrastmaterial (15) Kunststoff ist.

11. Schild nach einem der Ansprüche 1 bis 9, dadurch gekennzeichnet, daß das Kontrastmaterial (15) Keramik ist.

12. Schild nach einem der Ansprüche 1 bis 11, dadurch gekennzeichnet, daß mehrere Symbolträger (6) auf einer aus hochwärmebeständigem, rostfreiem Stahlblech bestehenden Grundplatte (Fig. 1, 11 : 4 ; Fig. 15, 16 : 35 ; Fig. 18 : 55) aneinanderreihbar sind.

13. Schild nach Anspruch 12, dadurch gekennzeichnet, daß die Grundplatte oder die Symbolträger (6) am Ober- und Unterrand Umfalzungen (13) aufweisen, die die glatte Ober- und Unterkante der Symbolträger bzw. der Grundplatte (4, 35) durch Einschieben aufnehmen.

14. Schild nach Anspruch 12, dadurch gekennzeichnet, daß die Grundplatte (4) in regelmäßigen Abständen Bohrungen oder Schlitze (23) aufweist, in die in angepaßtem Abstand angeordnete Befestigungslappen (24) der Symbolträger (6) einsteckbar sind, so daß die Symbolträger (6) durch Umlegen der Befestigungslappen (24) an der Grundplatte (4) festlegbar sind (Fig. 9, 10).

15. Schild nach einem der Ansprüche 12 bis 14, dadurch gekennzeichnet, daß die Grundplatte (4) auf wenigstens einem Tragebügel (7) befestigt ist, der vorzugsweise mittels eines Schellenbandes (3) an einem Schilderträger, beispielsweise einem Rohr (2), festlegbar ist, und daß der Tragebügel (7) und gegebenenfalls das Schellenband (3) aus hochwärmebeständigem, rostfreiem Stahl hergestellt sind (Fig. 11 bis 14).

16. Schild nach Anspruch 15, dadurch gekennzeichnet, daß die Tragebügel (7) ein Paar von sich gegenüberliegenden Langlöchern (8) zum Durchziehen des Schellenbandes (3) aufweist.

17. Schild nach Anspruch 15 oder 16, dadurch gekennzeichnet, daß auf der der Grundplatte (4) zugewandten Seite des Tragebügels (7) ein U-förmiger Blechstreifen (10) mit seiner Basis vorzugsweise durch Schweißen (11) befestigt ist, daß die Grundplatte Öffnungen (12) besitzt, durch die die beiden Schenkel des Blechstreifens (10) gesteckt und anschließend zum Festlegen der Grundplatte umgelegt werden können.

18. Schild nach Anspruch 17, dadurch gekennzeichnet, daß die Öffnungen (12) der Grundplatte (4) als Sätze in regelmäßigen Abständen über die Länge der Grundplatte (4) wiederholt sind und daß die Sätze von Öffnungen jeweils aus zwei gegeneinander um 90° versetzten Paaren von sich gegenüberliegenden Langlöchern (12) bestehen (Fig. 11).

19. Schild nach einem der Ansprüche 1 bis 11, dadurch gekennzeichnet, daß die Symbolträger (6) einen seitlichen, in der Ebene zurückversetzten, plattenartigen Fortsatz (21) besitzen, auf dem der jeweils nächste Symbolträger (6) festlegbar ist, derart, daß die Symbolträger aneinanderreihbar sind (Fig. 6 bis 8).

20. Schild nach Anspruch 19, dadurch gekennzeichnet, daß der Symbolträger (6) oder der Fortsatz am Ober- und Unterrand Umfalzungen (13) aufweisen, die die glatte Ober- und Unterkante des Fortsatzes (21) bzw. des Symbolträgers durch Einschieben aufnehmen und daß der Fortsatz (21) vorstehende Nocken (22) aufweist, die einen aufgeschobenen Symbolträger (6) klemmend festhalten.

21. Schild nach einem der Ansprüche 1 bis 11, dadurch gekennzeichnet, daß eine Tafel (31) innerhalb eines Rahmens (33) eine Einschubeinrichtung (35, 55) für aneinanderreihbare Symbolträger (6) und eine Abschlußvorrichtung (38) aufweist, die die eingeschobenen Symbolträger (6) sichert, und daß alle Teile des Schildes aus hochwärmebeständigem, rostfreiem Stahl bestehen (Fig. 15, 16, 18).

22. Schild nach Anspruch 21, dadurch gekennzeichnet, daß die Tafel (31) innerhalb des Rahmens (33) eine Einsenkung (32) aufweist, daß die Einschubeinrichtung zwei im Abstand der Symbolträgerhohe parallele, auf dem Bodem der Einsenkung (32) angeordnete Blechstreifen (35) aufweist, daß die Außenkanten der Blechstreifen (35) oder der Ober- und Unterrand der Symbolträger (6) Umfalzungen (13) aufweist, die die glatte Ober- und Unterkante der Symbolträger (6) bzw. die Außenkanten der Blechstreifen (35) durch Einschieben aufnehmen (Fig. 16, 17).

23. Schild nach Anspruch 21, dadurch gekennzeichnet, daß die Tafel (31) innerhalb des Rahmens (32) eine Einsenkung aufweist, daß die Einschubeinrichtung eine mit einem Ende auf dem Boden der Einsenkung befestigte Trägerplatte (55) aufweist, und dab die Symbolträger (6) im Querschnitt die Form eines flachgedrückten Rohres haben, derart, daß sie auf die Trägerplatte aufschiebbar sind (Fig. 18, 19).

24. Schild nach einem der Ansprüche 21 bis 23, dadurch gekennzeichnet, daß der sich an das Ende der Einschubeinrichtung (35, 55) anschließende Rahmenschenkel (38) zur Bildung der Abschlußvorrichtung leicht lösbar angeordnet ist.

25. Schild nach Anspruch 24, dadurch gekennzeichnet, daß die Rahmenschenkel (38) abklappbar ist.

26. Schild nach Anspruch 24, dadurch gekennzeichnet, daß der Rahmenschenkel (38) wenigstens einen zum Rahmeninneren weisenden Schieber (39) besitzt, der klemmend in einen unterhalb der Symbolträger (6) angeordneten Kanal (40) einschiebbar ist (Fig. 15).

27. Schild nach Anspruch 26, dadurch gekennzeichnet, daß der Schieber (39) ein Rastorgan (42) aufweist, das zusammen mit einer Rastfeder (44, 45) den Rahmenschenkel (38) im geschlossenen Zustand verrastet (Fig. 15).

28. Schild nach einem der Ansprüche 21 bis 27, dadurch gekennzeichnet, daß wenigstens zwei Zeilen von Symbolträgen (6) mit je einer Einschubvorrichtung (35, 55) vorgesehen sind (Fig. 15, 16, 18).

29. Schild nach Anspruch 26 oder 27 und 28, dadurch gekennzeichnet, daß der Rahmenschenkel (38) zwei Schieber (39) besitzt, die je in einen eigenen Kanal (40) klemmend einschiebbar sind (Fig. 15, 16, 18).

30. Schild nach einem der Ansprüche 21 bis 29, dadurch gekennzeichnet, daß der Rahmenschenkel (38) mit einem Schloß versehen ist.

## Claims

1. A fireproof identification plate comprising at least one symbol support or carrier (6) of sheet-metal containing one or more symbols in the form of recesses (14), and a material (5, 15) of contrasting colour, characterised in that the material fills the recesses (14) and in that the sheet-metal is a high-temperature resistant stainless-steel sheet and the contrasting material (5, 15) is such that it exposes the recesses when subjected to temperature.

2. A plate according to claim 1, characterised in that the recesses (14) are filled with the contrast material (15) by injection moulding.

3. A plate according to claim 2, characterised in that the contrast material (15) projects from the sheet-metal on the observer's side and so covers the edges of the recess (at 14) that the associated symbol formed by the contrast material (15) is larger than the symbol formed by the recess (14).

4. A plate according to claim 3, characterised in that the contrast material (15) forms a closed surface (17) behind the recess (14) on the back remote from the observer (Fig. 3).

5. A plate according to claim 1, characterised in that symbol elements made from contrast material (15) are inserted or pressed into the recesses (14) (Figs. 4 and 5).

6. A plate according to claim 5, characterised in that studs (18) connect the symbol elements after the style of press-fasteners to a companion plate (20) disposed at the back of the symbol support (6) (Fig. 5).

7. A plate according to claim 1, characterised in that the symbol elements are stuck to the symbol support.

8. A plate according to any one of claims 5 to 7, characterised in that on the observer's side the symbol elements cover the edges of the recesses (14) in such manner that the symbol elements are larger than the symbols formed by the recesses (14).

9. A plate according to claim 1, characterised in that the contrast material is disposed in the form of a preferably white contrast plate (5) behind the symbol support (6) (Figs. 11 to 14).

10. A plate according to any one of claim 1 to 9, characterised in that the contrast arterial (15) is plastics.

11. A plate according to any one of claims 1 to 9, characterised in that the contrast arterial (15) is ceramics.

12. A plate according to any one of claimn 1 to 11, characterised in that a plurality of symbol supports (6) can be strung together side by side on a baseplate (Fig. 1, 11 : 4 ; Fig. 15, 16 : 35 ; Fig. 18 : 55) consisting of high-temperature resistant stainless-steel sheet-metal.

13. A plate according to claim 12, characterised in that the baseplate or the symbol supports (6) have bent-over top and bottom edges (13) to receive the smooth top and bottom edges of the symbol supports or baseplate (4, 35) by sliding in.

14. A plate according to claim 12, characterised in that the baseplate (4) has bores or slots (23) at regular intervals, into which fixing lugs (24) disposed at matching intervals on the symbol supports (6) can be inserted so that the symbol supports (6) can be secured on the baseplate (4) by folding over the fixing lugs (24) (Figs. 9 and 10).

15. A plate according to any one of claims 12 to 14, characterised in that the baseplate (4) is fixed on at least one carrying yoke (7) which can be secured to a plate support, for example a pipe (2), preferably by means of a clamp strap (3), and in that the carrying yoke (7) and, if required, the clamp strap (3) are made from high-temperature resistant stainless-steel (Figs. 11 to 14).

16. A plate according to claim 15, characterised in that the carrying yoke (7) has a pair of oppositely situated slots (8) for pulling the clamp strap (3) therethrough.

17. A plate according to claim 15 or 16, characterised in that a U-shaped sheet-metal strip (10) in secured by its base, preferably by welding (11), to the side of the carrying yoke (7) facing the baseplate (4), and in that the baseplate has apertures (12) through which the two limbs of the sheet-metal strip (10) are pushed and then folded over to secure the baseplate.

18. A plate according to claim 17, characterised in that the apertures (12) in the baseplate (4) are repeated as sets at regular intervals over the length of the baseplate (4) and in that the sets of apertures each consist of two 90°-offset pairs of oppositely situated slots (12) (Fig. 11).

19. A plate according to any one of claims 1 to 11, characterised in that the symbol supports (6) have a lateral plate-like extension (21) which is set back in the plane and on which the next symbol support (6) can be so secured that the symbol supports are adapted to be strung together (Figs. 6 to 8).

20. A plate according to claim 19, characterised in that the symbol support (6) or the extension has bentover top and bottom edges (13) which receive the smooth top and bottom edges of the extension (21) or of the symbol support by sliding in and in that the extension (21) has projecting lugs (22) which clampingly retain a pushed-on symbol support (6).

21. A plate according to claims 1 to 11, characterised in that a panel (31) has within a frame (33) a means (35, 55) for sliding in symbol supports (6) which are adapted to be strung together, and has an end device (38) to secure the symbol supports (6) after they have been slid in, and in that all parts of the plate consist of high-temperature resistant stainless-steel (Figs. 15, 16, 18).

22. A plate according to claim 21, characterised in that the panel (31) has a depression (32) within the frame (33), in that the means for sliding in the symbol supports comprises two sheet-metal strips (35) which are disposed on the base of the depression (32) and which are parallel with spacing equivalent to the symbol support height, and in that the outer edges of the sheet-metal strips (35) or the top and bottom edges of the symbol supports (6) are bent-over edges (13) which receive the smooth top and bottom edges of the symbol supports (6) or the outer edges of the sheet-metal strips (35) by sliding in (Figs. 16 and 17).

23. A plate according to claim 21, characterised in that the panel (31) has a depression within the frame (32), in that the means for sliding the symbol supports in comprises a carrier plate (55) secured by one end on the base of the depression and in that the symbol supports (6) have the shape of a flattened tube in cross-section such that they can be pushed on to the carrier plate (Figs. 18 and 19).

24. A plate according to any one of claims 21 to 23, characterised in that the frame limb (38) adjoining the end of the means (35, 55) for sliding the symbol supports in is arranged to be readily detachable to form the end device.

25. A plate according to claim 24, characterised in that the frame limb (38) is hinged.

26. A plate according to claim 24, characterised in that the frame limb (38) comprises at least one slide (39) pointing towards the interior of the frame and adapted to be slid clampingly into a channel (40) disposed beneath the symbol supports (6) (Fig. 15).

27. A plate according to claim 26, characterised in that the slide (39) has a detent means (42) which together with a detent spring (44, 45) locates the frame limb (38) in the closed state (Fig. 15).

28. A plate according to any one of claims 21 to 27, characterised in that at least two lines of symbol supports (6) are each provided with a slide-in means (35, 55) (Figs. 15, 16, 18).

29. A plate according to claim 26 or 27 and 28, characterised in that the frame limb (38) comprises two slides (39) each adapted to be slid clampingly into its own channel (40) (Figs. 15, 16, 18).

30. A plate according to any one of claims 21 to 29, characterised in that the frame limb (38) is provided with a lock.

## Revendications

1. Panneau d'identification à l'épreuve du feu, comprenant au moins un support de symbole (6) en tôle, qui comporte un ou plusieurs symboles sous forme d'évidements (14) et un matériau à contraste de coloration (5, 15), caractérisé, en ce que le matériau comble les évidements (14) et en ce que la tôle est une tôle d'acier inoxydable très résistante à la chaleur, et le matériau à contraste de coloration (5, 15) est tel qu'il dégage les évidements sous l'action de la température.

2. Panneau suivant la revendication 1, caractérisé en ce que les évidements (14) sont comblés avec le matériau contrastant (15) par pulvérisation.

3. Panneau suivant la revendication 1, caractérisé en ce que le matériau contrastant est en saillie par rapport à la tôle, du côté d'observation du panneau, et recouvre les bords de l'évidement (en 14), de façon que le symbole constitué par le matériau contrastant (15) soit plus grand que le symbole formé par l'évidement (14).

4. Panneau suivant la revendication 3, caractérisé en ce que le matériau contrastant (15) forme, du côté arrière éloigné de l'observateur, une surface d'un seul tenant (17) derrière l'évidement (14) (figure 3).

5. Panneau suivant la revendication 1, caractérisé en ce que dans les évidements (14) sont enfilés ou sont enfoncés des éléments de symbole fabriqués en le matériau contrastant (15) (figures 4, 5).

6. Panneau suivant la revendication 5, caractérisé en ce que les éléments de symbole sont reliés, par des chevilles d'encliquetage (18) à la manière d'un bouton-pression, à une contre-plaque (10) disposée du côté arrière du support de symbole (6).

7. Panneau suivant la revendication 1, caractérisé en ce que les éléments de symbole sont collés au support de symbole.

8. Panneau suivant l'une des revendications 5 à 7, caractérisé en ce que les éléments de symbole recouvrent, du côté d'observation du panneau, les bords des évidements (14), de manière telle que les éléments de symbole sont plus grands que les symbole formés par les évidements (14).

9. Panneau suivant la revendication 1, caractérisé en ce que le matériau contrastant est disposé, sous la forme d'une plaque de contraste (5), de préférence blanche, derrière le support de symbole (6) (figures 11 à 14).

10. Panneau suivant l'une des revendications 1 à 9, caractérisé en ce que le matériau contrastant (15) est de la matière plastique.

11. Panneau suivant l'une des revendications 1 à 9, caractérisé en ce que le matériau contrastant (15) est de la céramique.

12. Panneau suivant l'une des revendications 1 à 11, caractérisé en ce que plusieurs supports de symbole (6) peuvent être rangés l'un à côté de l'autre sur une plaque de base en tôle d'acier inoxydable très résistante à la chaleur (figures 1, 11 : 4 ; figures 15, 16 : 35 ; figure 18 : 55).

13. Panneau suivant la revendication 11, caractérisé en ce que la plaque de base ou les supports de symbole comportent, au bord supérieur et au bord inférieur, des parties repliées (13) dans lesquelles sont insérés les bords lisses supérieur et inférieur des supports de symbole ou de la plaque de base (4, 35).

14. Panneau suivant la revendication 11, caractérisé en ce que la plaque de base (4) comporte à intervalles réguliers des trous ou des tentes (23), dans lesquels peuvent être introduites des languettes de fixation (14), disposées à un intervalle adapté, des supports de symbole (6) de manière à pouvoir fixer les supports de symbole (6) en rabattant les languettes de fixation (24) sur la plaque de base (4) (figures 9, 10).

15. Panneau suivant l'une des revendications 12 à 14, caractérisé en ce que la plaque de base (4) est fixée sur au moins un étrier de support (7) qui peut être fixé, de préférence au moyen d'une bande formant collier (3), à un support de panneau, par exemple à un tube (2), et en ce que l'étrier de support (7) et, le cas échéant, la bande formant collier (3) sont en acier inoxydable très résistant à la chaleur (figures 11 à 14).

16. Panneau suivant la revendication 15, caractérisé en ce que l'étrier de support (7) comporte un couple de boutonnières (9) situées l'une en face de l'autre, pour le passage de la bande formant collier (3).

17. Panneau suivant la revendication 15 ou 16, caractérisé en ce que, du côté de l'étrier de support (7), tourné vers la plaque de base (4), une bande de tôle (10) en forme de U est fixée, par sa base, de préférence par soudage (11), en ce que la plaque de base possède des ouvertures (12) par lesquelles les deux branches de la bande de tôle (10) peuvent être enfilées et être ensuite rabattues pour la fixation à la plaque de base.

18. Panneau suivant la revendication 17, caractérisé en ce que les ouvertures (12) de la plaque de base (4) se répètent sous forme de jeux et à intervalles réguliers sur la longueur de la plaque de base (4), et en ce que les jeux d'ouvertures sont constitués de deux couples de boutonnières (12) opposées et décalées de 90° l'un par rapport à l'autre (figure 11).

19. Panneau suivant l'une des revendications 1 à 11, caractérisé en ce que les supports de symbole (6) possèdent un appendice latéral (21) en forme de plaque et en retrait par rapport au plan, sur lequel le support de symbole (6) suivant peut être fixé, de manière à pou-voir ranger les supports de symbole les uns à côté des autres (figures 6 à 8),

20. Panneau suivant la revendication 19, caractérisé en ce que le support de symbole (6) ou l'appendice comporte, au bord supérieur et au bord inférieur, des parties repliées (13) dans lesquelles sont insérés les bords libres supérieur et inférieur de l'appendice (21) ou du support de symbole, et en ce que l'appendice (21) comporte des cames saillantes (22) qui retiennent par blocage un support de symbole (6) après son insertion.

21. Panneau suivant l'une des revendications 1 à 11, caractérisé en ce qu'un plateau (31) comporte, à l'intérieur d'un cadre (33), un dispositif d'insertion (35, 55) pour des supports de symbole (6) qui peuvent être rangés les uns à côté des autres et un dispositif de fermeture (38) qui bloque les supports de symbole (6) qui ont été insérés, et en ce que toutes les parties du panneau sont en un acier inoxydable très résistant à la chaleur (figures 15, 16, 18).

22. Panneau suivant la revendication 21, caractérisé en ce que le plateau (31) comporte, à l'intérieur du cadre (33), une creusure (32), en ce que le dispositif d'insertion comporte deux bandes de tôle (35) parallèles et disposées à distance du niveau des supports de symbole, sur le fond de la creusure (32), en ce que les bords extérieurs des bandes de tôle (35) ou le bord supérieur et le bord inférieur des supports de symbole (6) comportent des parties repliées (13) dans lesquelles sont insérés les bords lisses supérieur et inférieur des supports de symbole (6) ou les bords extérieurs des bandes de tôle (35) (figures 15, 17).

23. Panneau suivant la revendication 21, caractérisé en ce que le plateau (31) comporte, à l'intérieur du cadre (32), une creusure, en ce que le dispositif d'insertion comporte une plaque de support (55) fixée par tune extrémité au fond de la creusure, et en ce que les supports de symbole (6) ont, en section transversale la forme d'un tube aplati, de façon à pouvoir être glissés sur la plaque de support (figures 18, 19).

24. Panneau suivant l'une des revendications 21 à 23, caractérisé en ce que la branche du cadre (38), qui se raccorde à l'extrémité du dispositif d'insertion (35, 55), est, pour former le dispositif de fermeture, montée de manière à être facilement amovible.

25. Panneau suivant la revendication 24, caractérisé en ce que la branche du cadre (38) peut être rabattue.

26. Panneau suivant la revendication 24, caractérisé en ce que la branche du cadre (38) possède au moins un coulisseau (39) qui est tourné vers l'intérieur du cadre et qui peut être introduit avec blocage dans un canal (40) disposé en-dessous du support de symbole (6) (figure 15).

17. Panneau suivant la revendication 26, caractérisé en ce que le coulisseau (39) comporte un organe d'encliquetage (41) qui, avec un ressort d'encliquetage (44, 45), bloque à l'état germé la branche du cadre (38) (figure 15).

28. Panneau suivant l'une des revendications 21 à 2 7, caractérisé en ce que sont prévues au moins deux rangées de supports de symbole (6), munies chacune d'un dispositif d'insertion (35, 55) (figures 15, 16, 18).

29. Panneau suivant la revendication 26 ou 27 et 28, caractérisé en ce que la branche de cadre (18) possède deux coulisseaux (39) qui peuvent être introduits respectivement, avec blocage, dans un canal (40) qui leur est propre (figures 15, 16, 18).

30. Panneau suivant l'une des revendications 11 à 29, caractérisé en ce que la branche de cadre (38) est munie d'une serrure.

FIG.1

FIG. 2

FIG.3

FIG.4

FIG.5

FIG. 6

FIG. 8

FIG. 7

FIG. 9

FIG.10

FIG.11

FIG.12

FIG.13

FIG.14

FIG. 16

FIG. 15

EP 0 292 753 B1

## FIG.17

## FIG.18

## FIG.19